# EUROPEAN PATENT APPLICATION

(11) **EP 1 055 919 A1**
(43) Date of publication of application: **29.11.2000**
(21) Application number: 00304359.3
(22) Date of filing: 23.05.2000
(51) Int. Cl.: G01K 3/04

(54) **A method for initializing control of a thermal indicating material, a thermal monitoring member and a thermal monitoring method**

(30) Priority: 24.05.1999 JP 14331899; 19.10.1999 JP 29728099
(71) Applicant: Toshiba Tec Kabushiki Kaisha, Tokyo, 101-8442 (JP)
(72) Inventor: Tamura, Toshiyuki, Chiyoda-ku, Tokyo 101-8442 (JP)
(74) Representative: Faulkner, Thomas John

(57) **Abstract**

There is provided a temperature monitoring member having a temperature indicating material, the whole portions or some portions of which undergoes color changes with temperature, the temperature indicating material differs color change rate according to environmental temperature after initialization by heating and quenching. The thermal energies for initialization to the temperature indicating material is set according to the desired color developing rate. Accordingly, different thermocromism characteristics are obtained in each thermal energy applied area of the thermal indicating material. It is, therefore, possible to identify environmental temperature, exposure period and both these identify environmental temperature and exposure period by using single temperature monitoring member. Accordingly, low cost temperature monitoring member can be easily obtained.

## Description

### BACK GROUND OF THE INVENTION

### Field of the Invention

The present invention relates to a method for initializing control of thermal indicating material using the thermal indicating material, which undergoes color changes with temperature. The present invention also relates to a thermal monitoring member and a thermal monitoring method using the thermal indicating material, which undergoes color changes with temperature.

### Description of the Prior Art

A label-formed thermal monitoring member is used. A label, which an ink-formed thermal indicating material is coated, or a label, which an ink-formed thermal indicating material is printed, makes the thermal monitoring member. The thermal indicating material undergoes color changes with temperature. The ink-formed thermal indicating material is made by a resin and dispersed thermal indicating material into the resin. Generally, the thermal indicating material with certain pattern is printed or coated on the label, so that the thermal indicating material shows certain information, e.g. environmental temperature or exposure period, by color changes thereof.

As a temperature indicating material, which undergoes color changes with temperature, have conventionally been put on the market. It is known that a method for using single thermal indicating material or plural kinds of thermal indicating material of which impregnates with ink.
1) Thermochromic organic pigments, for example,
   ethylene derivatives substituted with a condensed aromatic ring such as spiropirans, bianthrone or dixanthylene
2) crystals of a metal complex salt, for example.
   CoCl₂·2(CH₂)₆N₄·10H₂O·10H₂O, PbCrO₂, Cu₂HgI₄,Ag₂HgI₄
3) liquid crystal
   choresteric material
4) combinations of an electron donating compound, an electron accepting compound and a polar organic compound
   * electron donating compound
      phenylmethane dye group such as Fluoran group and Phenylphthalide group, indolylphthalide group, spiropyran, Lauco auramin, acyl or aryl auramin, arylauramine and so on
   * electron accepting compound
      phenol compund, phenol compound metallic salt and so on
   * polar organic compound
      fatty alcohol (oleyl alcohol and so on), amides (acetacetylanilid and so on), esters (disphenyl phthalate and so on), primary amine of hydrophobic carboxylic acid, ketones or ethers and so on

In case of 3) or 4), these materials are used by micro capsule technics.

Upon use of a temperature monitoring label prepared from such a temperature indicating material, color changes with temperature are judged visually.

Roughly speaking, there are two types of temperature indicating materials, that is, a reversible type and irreversible type. In the former one, the color changes unlimitedly in response to a temperature increase or decrease, while in the latter one, the color, which has once changed at a certain temperature, does not show any further change.

The reversible type material is used for indicating the time good for drinking of beer or the like, or for visually attracting attentions to a temperature change. As the temperature monitoring of fruits and vegetables, or perishable foods, the temperature indicating material, which has stored its thermal history, is disclosed in Japanese Patent Publication No. SHO 58-10709. That is, an ink having a viscosity changeable with temperature (for example, an ink which has a pigment dissolved in oleyl alcohol) penetrates in a penetration material and the length of the ink penetrated in the material indicates how long it is exposed to a temperature not lower than a predetermined temperature.

As the irreversible type of material, Japanese Patent Application Laid-Open No. hei 8-197853 discloses a method for temperature monitoring using a rewritable material composed of a electron donating compound, electron accepting compound, reversal material and a phase separation controller. This method utilizes the fact that a drastic change in color developing rate, at a temperature not lower than the glass transition point after initial decolorization, occurs.

Japanese Patent Application Laid-Open No. hei 5-19695 discloses a system using a temperature monitoring label, the recorded code of which is changeable at an environmental temperature not lower than the preset storage temperature.

The problem of such a prior are will next be described. The rewritable material is able to give a warning of the environmental temperature not lower than preset storage temperature. However, storage temperature range cannot be identified for such rewritable material. The storage condition of an article having the rewritable material also cannot be identified without recognition of at least exposure period and environmental temperature, because the color of the rewritable material changes with function between the exposure period and the environmental temperature.

As an improved method, it may be supposed that the temperature monitoring member provides plural temperature indicating materials having different thermocromism characteristics one another so as to recognize the storage condition based upon each temperature indicating material. However, this method requires plural temperature indicating materials having different thermocromism characteristics one another so that the cost of production with respect to the temperature monitoring member becomes high.

### SUMMARY OF THE INVENTION

Accordingly, an object of the present invention is to provide a method for initializing control of thermal indicating material so as to show plural thermochromisms responding to plural storage environments.

Another object of the present invention is to provide a thermal monitoring member having plural thermochromisms responding to plural storage environments.

A further object of the present invention is to provide a thermal monitoring method so as to show plural thermochromisms responding to plural storage environments

These and further object of the present invention are achieved by the novel method for initializing control of thermal indicating material, thermal monitoring member and thermal monitoring method of the present invention.

According to the novel method for initializing control of thermal indicating material of the present invention, thermal energy is applied to certain area of the thermal indicating material which undergoes color changes with temperature. Thermal energy is also applied with different level to different area of the thermal indicating material. Accordingly, different thermocromism characteristics are obtained in each thermal energy applied area of the thermal indicating material.

According to the novel thermal monitoring member of the present invention, there is provided a base and a thermal indicating material which undergoes color changes with temperature. The color changing rate of the thermal indicating material differs from temperature to temperature after initialize by heating and quenching. Information is recorded on the thermal indicating material by heating and quenching energy according to target value with respect to color changing rate. Accordingly, the thermal indicating material shows plural thermocromism characteristics.

According to the novel thermal monitoring method of the present invention, this method using an article having a thermal monitoring member comprising a thermal indicating material which undergoes color changes with temperature. The thermal indicating material differs color changing rate from temperature to temperature after initialize by heating and quenching. The thermal indicating material also differs color changing rate from heating and quenching energy for initialize of the thermal indicating material to the same. Thermal energy is applied to certain area of the thermal indicating material, thermal energy is applied with different level to different area of the thermal indicating material. Accordingly, different thermocromism characteristics are obtained in each thermal energy applied area of the thermal indicating material, so that environmental temperature or exposure period can be identified.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, in which:
Figure 1 is an explanatory view illustrating the principle of the color-developed state and decolorized state of the temperature indicating material according to the present invention;
Figure 2 is an explanatory view illustrating the change between the color development and decolorization based on the thermal conditions of the temperature indicating material (member) according to the present invention;
Figure 3 is a cross-sectional view illustrating the temperature monitoring member according to the present invention;
Figure 4 is a graph illustrating the initialization characteristics of the temperature indicating material according to the present invention;
Figure 5 is a graph illustrating the reflectance at 25°C of the temperature indicating material according to the present invention;
Figure 6 is a plan view illustrating an example of the temperature monitoring member according to the present invention;
Figure 7(A) is an explanatory view of the temperature or time monitoring method using the bar code illustrating "49000078" expressed by the bar code according to the present invention;
Figure 7(B) is an explanatory view of the temperature or time monitoring method using the bar code illustrating "49000054" expressed by the bar code according to the present invention;
Figure 7(C) is an explanatory view of the temperature or time monitoring method using the bar code illustrating the bar code in the condition of the temperature upper than a predetermined temperature.
Figure 7(D) is an explanatory view of the temperature or time monitoring method using the bar code illustrating "49000078" expressed by the bar code according to the present invention;
Figure 8(A) is a graph illustrating the temperature characteristics of the initialized temperature indicating material after 5 hours from initialization according to the present invention; and
Figure 8(B) is a graph illustrating the temperature characteristics of the initialized temperature indicating material after 8 hours from initialization according to the present invention.

### DETAILED DESCRIPTION OF THE PREFERRED EMBODIMENTS

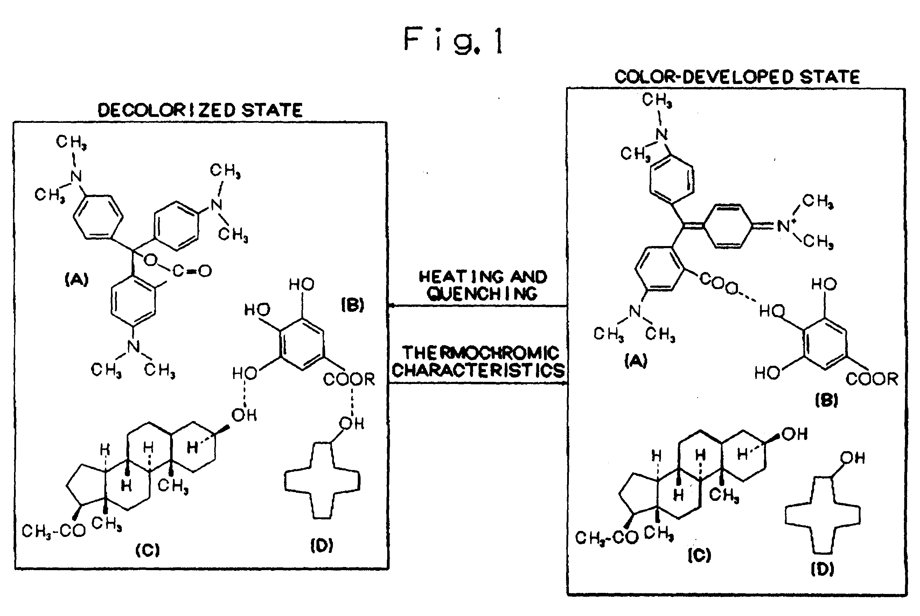

The embodiments of the present invention will next be described based on the drawings. The temperature indicating materials according to these embodiments each has a system as shown in FIG. 1 and is obtained by adding, to a rewritable basic system composed of an electron donating compound A (which will hereinafter be called "leuco dye A"), an electron accepting compound B (which will hereinafter be called "developer B") and a reversal material C, a thermochromism controller D and a binder resin. The reversal material means a material that causes reversible transformation between crystal and amorphous with respect to a part or all of the composition system, or reversible transformation between phase separation and non-phase-separation.

In these embodiments, crystal violet lactone (CVL), propyl gallate (PG), pregnenolone (PRN) and cyclododecanol (CD) are used as the leuco dye A, developer B, reversal material C and thermochromism controller D, respectively. The propyl gallate (PG) is used with quantity that is able to be soluble in molten cyclododecanol (CD).

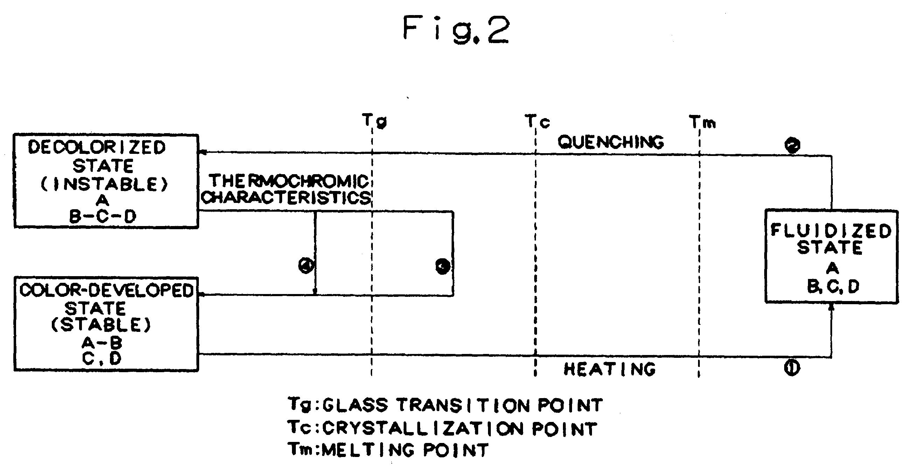

A description will next be made of the thermodynamic reversibility of this system with reference to FIG. 2. Under the color developed condition, the developer B and leuco A have strong mutual action, while the reversal material C and thermochromism controller D exists independently in the crystal form. Heating of this temperature indicating material to the melting point Tm or higher (shown by ① ) fluidizes the material, which lowers the mutual action between the developer B and the leuco dye A while heightens the mutual action of the developer B with the thermochromism controller D and reversal material C which have been molten by heating, resulting in decolorization. By quenching (as shown by ②) thereafter, the developer B solidifies in the amorphous state while being absorbed in the reversal material C and thermochromism controller D and the decolorized state is maintained. Heating (as shown by ③) to a temperature not lower than the glass transition point Tg then causes separation of the developer D from the reversal material C and thermochromism controller D, followed by the initiation of drastic diffusion, whereby color development proceeds. The diffusion rate of the developer B shows a drastic change at a temperature around the glass transition point Tg. Since the reversal material C and thermochromism controller D have stable crystal conditions, color development proceeds even at a temperature not higher than the glass transition point Tg (as shown in ④) and in this area, the material exhibits time- and temperature-dependent thermochromism.

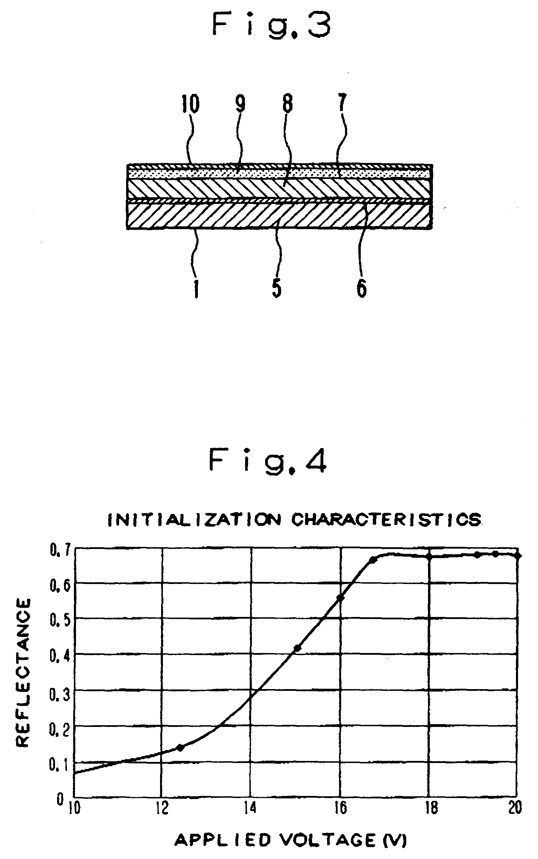

The temperature monitoring member 1 utilizing the above system is provided, as shown in FIG. 3, by successive adhering, to a base 5, a thermal diffusion preventive layer 6, the temperature indicating material 7 for undergoing initialize by a thermal head, and protection layer 10. The temperature indicating material 7 comprises a PET base 8 and an ink layer 9 coated on the PET base 8. For executing temperature monitoring, the temperature indicating material 9 is heated and quenched so as to solidify the developer B in non-stable decolorized condition.

FIG. 4 is a graph illustrating the initialization characteristics of the temperature indicating material 7. FIG. 4 shows the relationship between applied voltage to the thermal head for initialization and reflectance of initialized portion about the temperature indicating material 7. The reflectance of the initialized portion gradually increases according to increase of the applied voltage to the thermal head. The reflectance of the initialized portion is saturated upper than 17,5 V of the applied voltage. The initialized condition is not hardly changed even though the voltage upper than 17.5 V is applied to the thermal head. However, value of the applied voltage influences color developing rate after initialization.

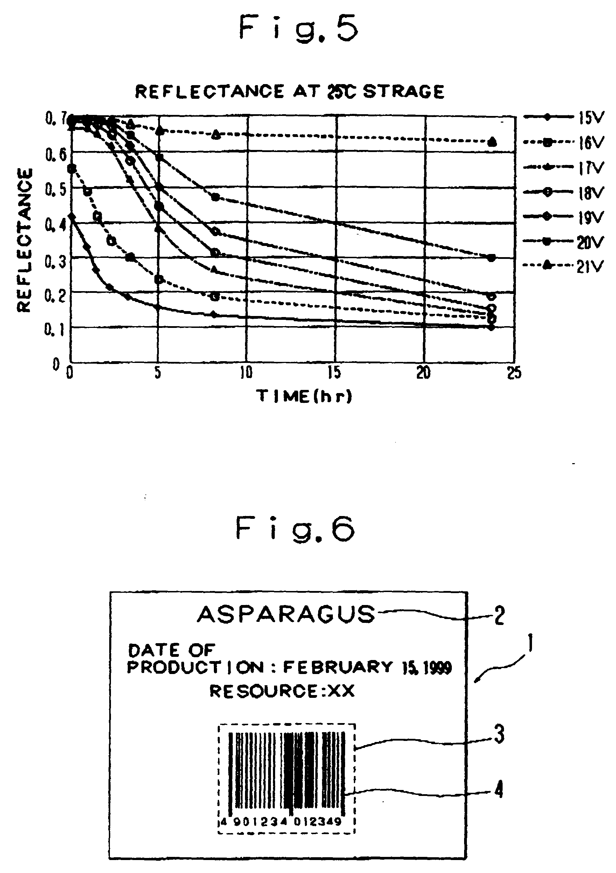

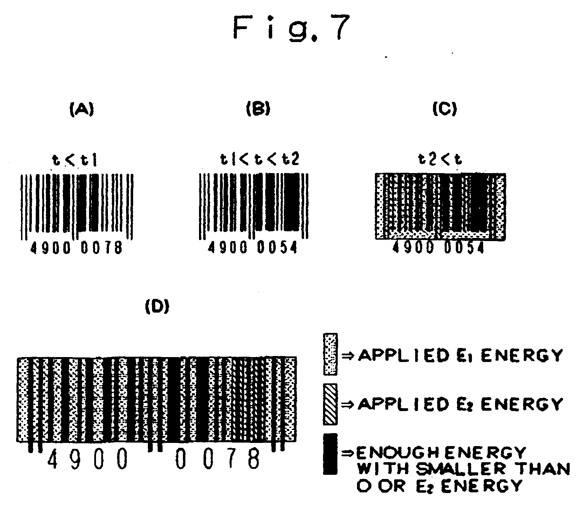

FIG. 5 shows the several reflectances at 25°C of the temperature indicating material 7 in case different voltages were applied to the thermal head for initializing the temperature indicating material 7. It is apparent from FIG. 5 that less the voltage, i.e., energy applied, the reflectance becomes smaller and smaller. This means that color development is promoted. The present invention utilizes such characteristics of the temperature indicating material 7 so as to obtain plural temperature-rate characteristics on single temperature monitoring material 1 by controlling thermal energy, applied pulse for instance, to the temperature indicating material 7. For one embodiment, utilizing such characteristics, the bar code can be formed by giving plural thermal energies E₁, E₂, ······ ··· to the temperature indicating material 7. In this case, the portions applied the thermal energy become decolorized space portions of the bar code. Thus, the portions not applied the thermal energy or applied small thermal energy lower than the thermal energy E₂.become bars. The space portions are formed, as shown in FIG. 7, by two different levels of thermal energies E₁, E₂ (E₁>E₂) so as to become the bar code (JAN8) "49000051" after initialization. As shown in FIG. 7(A), "49000051" continues while the temperature monitoring member 1 has been exposed less than t₁ period. The portions applied E₂ thermal energy develops faster than the portions applied E₁ thermal energy, so that the bar code will be changed as "49000054" as shown in FIG. 7(B). In this stage, it can be known that the temperature monitoring member 1 has been exposed in the period between t₁ to t₂. It can be also known, as shown in FIG. 7(C), that the temperature monitoring member 1 has been exposed more than t₂ period. Accordingly, the temperature indicating material 7 is initialized with plural thermal energies, so that exposure period in high temperature or exposure temperature can be identified.

The present invention utilizes the method for initializing control of thermal indicating material 4 with the plural levels of thermal energies, so that the single temperature indicating material 7 obtains different thermocromism characteristics. Thus, such different thermocromism characteristics in the single temperature indicating material 7 can be utilized.

The temperature indicating material 7 of the present invention comprises the electron donating compound A (leuco dye A), the electron accepting compound B (developer B), the reversal material C, the thermochromism controller D and the binder resin. Thus, low cost temperature monitoring member 1 such as the temperature monitoring label 1 shown in FIG. 6 can be easily obtained.

Further, bar code information is recorded on the temperature indicating material 7. This is great feature of the present invention. That is, the codes of the bar code will be changed according to the exposure temperature or the exposure period, so that the storage condition of an article to be attached the temperature monitoring label 1 can be recognized by a computer input the bar code information from a bar code reader.

The present invention will hereinafter be described more specifically by examples. The temperature monitoring member 1 is provided, as shown in FIG. 3, by successive adhering, to a base 5, a thermal diffusion preventive layer 6, the temperature indicating material 7, and protection layer 10. The temperature indicating material 7 comprises a PET base 8 and an ink layer 9 coated on the PET base 8. The protection layer 10 is formed by 0.2 µm coated sticking preventive layer in the thermal head side.

FIG. 6 shows an example of the temperature monitoring member 1. The temperature monitoring member 1 is composed of an article information 2 and a bar code 4 provided in the temperature indicating area 3. The temperature indicating material 7 is comprises the PET base 8 and the ink layer 9 coated on the PET base 8. The ink layer 9 comprises the leuco dye A, the developer B, the reversal material C, the thermochromism controller D (cyclododecanol) and the binder resin.

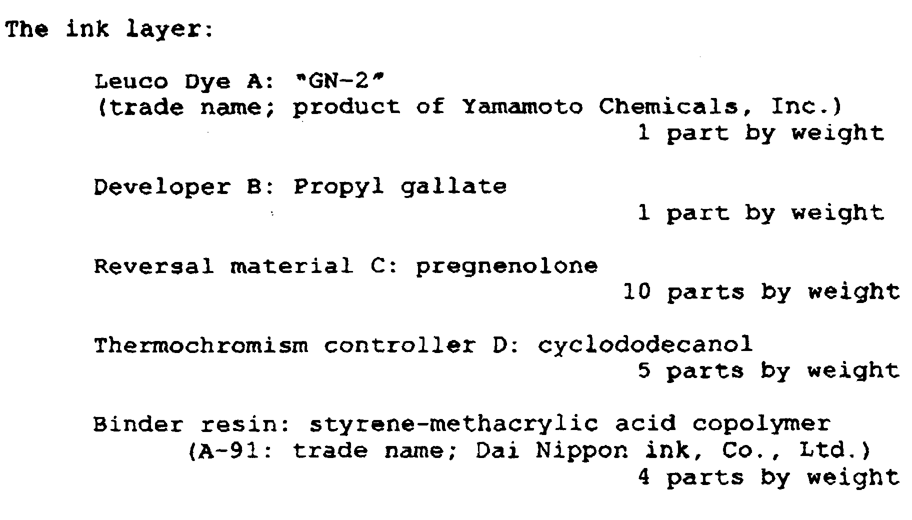

Each of the temperature monitoring member 1 is prepared as follows: first, a coating solution is prepared by completely dissolving a binder resin in 56 parts by weight of a 4:1 mixed solvent of toluene and cyclohexanone, adding Leuco Dye A, Developer B, Reversal material C and Thermochromism controller D to the resulting resin solution. charging glass beads of about ⌀ 3 mm to the resulting mixture to a height of the liquid surface, and stirring the mixture for about 90 minutes in a paint shaker. The coating solution thus obtained is applied to PEN 8 of 38 µm thick, whereby the ink layer 9 of 8 g/m² (dry weight) is prepared. The temperature indicating material 7 thus obtained is adhered to the thermal diffusion preventive layer 6 by using "My Tack Paper ML-10" (trade name; product of Nichiban Co., Ltd.) adhered on the white PET base 5. PEN (polyethylene naphthalate) of 3.5 µm added with a sticking preventive layer 6 was laminated as the protecting layer 10 against the discoloration by a thermal head. The sticking prevent layer is provided on the protecting layer 10. The sticking preventive layer was formed by applying "TS-100"' (trade name; product of Kuboko Paint Co., Ltd.), which had been diluted 5 times with toluene, to the protective layer 10 by a bar coater #3, followed by drying. Thus, the temperature monitoring member 1 is prepared.

The temperature monitoring member 1 can be initialize by applying thermal energy with the thermal head whereby the environmental temperature can be monitored. The initialization is executed by KBE-56-8MGK1 (trade name; Kyosera, Co., Ltd.) having head resistance of 1326 Ω with line velocity of 5 ms/line and pulse width of 3.5 ms. The thermal energy is controlled by the applied voltage. Figure 4 shows the decolor (initialization) characteristics of the temperature indicating material 7. The reflectance of the temperature monitoring member 1 designates 3 - 5 % when the thermal energy was not applied to the temperature indicating material 7, the reflectance of the same designates around 0.9 % when the thermal energy was applied to the temperature indicating material 7 with 10V (0.26 mJ/dot), and the reflectance of the same designates around 0.68 % and is saturated when the thermal energy was applied to the temperature indicating material 7 with 17V (0.76 mJ/dot). Figure 5 shows the reflectance at 25°C of the temperature indicating material 7 after initialization.

The reflectance of the temperature monitoring member 1 after initialization changes according to the value of applied voltage (thermal energy) for initialization. The higher voltage for initialization is applied to the temperature indicating material 7, the reflectance will become higher and higher and color developing rate, i.e. reflectance decline rate will become lower and lower. The reason for causing the phenomenon is assumed that the higher voltage for initialization is applied to the temperature indicating material 7, the mutual action between the thermochromism controller D, the developer B and the leuco dye A will become stronger and stronger, so that the acceleration rate for association between the developer B and the leuce dye A will be lower. The temperature indicating material 7 is not completely initialized with applied voltage of around 15V - 16V, but color development will promote at 25°C. The temperature indicating material 7 is sufficiently initialized with applied voltage of over 17 V, so that the color development will be accelerated at 25°C according to the value of applied voltage to the thermal head. The response characteristics of the temperature indicating material 7 strongly changes around 15°C, e.g., the color development of the temperature indicating material 7 is promoted extremely slow in environment of 10°C, but the color development is accelerated at 25°C according to the value of applied voltage to the thermal head. The method for initializing control of thermal indicating material 7, the thermal monitoring member 1 and the thermal monitoring method of the present invention, which applies plural values of voltage to the thermal head, utilizes such characteristics.

Hereinafter, it is described more concretely with respect to the method for initializing control of thermal indicating material 7, which controls applied voltage for initialization to the thermal head, and the temperature monitoring method using the temperature monitoring member 1 including plural areas having different thermocromism characteristics one another.

The method for identifying the range of exposure period in constant environmental temperature, and the method for identifying the range of the environmental temperature in certain period are described below.

A bar code shown in FIG. 7, for instance, is used in the method for initializing control of the thermal monitoring member 1 using the indicating material 7, which changes color with the applied thermal energy for heating and quenching from the thermal head. FIG. 7(A) shows the bar code immediately after initialization by using the method for initializing control of the thermal indicating material 7 according to the present invention. The bar code was formed by applied energies shown in FIG. 7(D). The portions expressing bars are formed by non-applied energy. The portions expressing spaces are formed by two different thermal energies E₁ and E₂. The thermal energy E₁ corresponds to applied voltage of 19 V to the thermal head shown in FIG. 5, and the thermal energy E₂ corresponds to applied voltage of 16 V to the thermal head shown in FIG. 5. These thermal energies E₁ and E₂, that is, voltages of 19V and 16V, are controlled by well-known pulse width modulation technique. In this embodiment, a bar-code reading apparatus recognizes the space portions as bar portions when the reflectance of space portions become lower than 0.3. Thus, as shown in FIG. 5, the bar code will change from condition of "49000078" shown in FIG. 7(A) to condition of "49000054" shown in FIG. 7(B) after 3 hours from initialization at 25°C storage. After that, the bar code become unreadable condition shown in FIG. 7(C) at 25°C storage. That is the portions applied thermal energy E₂ is change from "7" to "5" and from "8" to "4" at 25°C, further the portions applied thermal energy E₁ will develop with exposure in the high temperature. Accordingly, it is possible to classify the exposure period into three ranges with differences of color change rate by changing applied energy to the temperature indicating material 7. In this embodiment, the space of the bar code comprises two different thermal energies E₁ and E₂, but the present invention is not limited thereto. More multiple classifications with respect to the temperature monitoring member 1 can be obtained by using more than three thermal energies. Also the present invention is not limited to use of bar code.

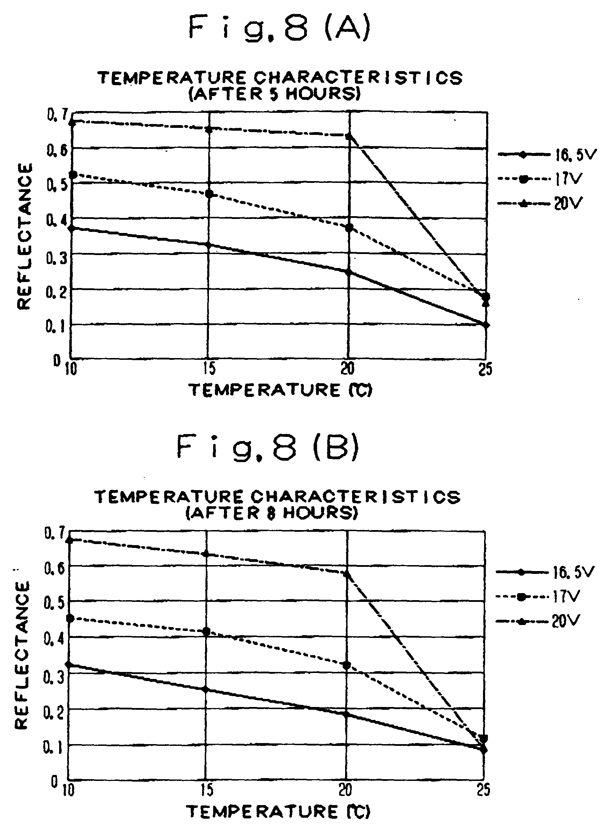

The temperature monitoring member 1 initialized by plural thermal energies is able to identify range of environmental (exposure) temperature in certain period. For example, providing the bar code shown in FIG. 7(A) to apply two thermal energies E₁ and E₂ to the temperature monitoring member 1. It is supposed that the thermal energy E₁ corresponds to applied voltage of 20V to the thermal head, the thermal energy E₂ corresponds to applied voltage of 16.5V to the thermal head, and temperature monitoring period is 5 hours (5 hours from initialization). Then, it can be known from FIG. 8(A) that the storage environmental temperature was less than 16°C in the condition shown in FIG. 7 (A), the storage environmental temperature was 16°C - 23°C in the condition shown in FIG. 7(B), and the storage environmental temperature was more than 23°C in the condition shown in FIG. 7(C).

Figure 8(B) shows the temperature characteristics of the initialized temperature indicating material 7 after 8 hours from initialization. In this embodiment, three ranges of temperature can be identified with initialization by two different energies, but more accurate identification with respect to the ranges of temperature can be executed if the more than three different energies were applied to the temperature indicating material 7. In this embodiment, as described above, the bar-code reading apparatus recognizes the space portions as bar portions when the reflectance of space portions become lower than 0.3. However, the present invention is not limited thereto. Threshold level like 0.3 can be easily defined in the bar-code reading apparatus or the like.

In this embodiment, the method for identifying the range of exposure period at 25°C and the method for identifying the range of environmental temperature after 5 hours from initialization is described above. However, the present invention is not limited thereto. Unknown range of environmental temperature and period from initialization can be identified from the reflectance at portions applied different thermal energies.

As described above, the temperature indicating material having different thermocromism characteristics in each portions by applying different thermal energies to the temperature indicating material for initialization can be obtained. The thermocromism characteristics means developing rate. That is, the method for initializing control of a thermal indicating material controls color developing rate in each portions of the temperature indicating material to apply different energies to plural portions of the temperature indicating material. However, the method for initializing control of a thermal indicating material according to the present invention is not limited for use of color developing control. Several kinds of use are permitted. Some kinds of that will be described below.

The method for initializing control of a thermal indicating material adds pressure to the temperature indicating material with heating thereof whereby the method produces thermal rolling. The portions with thermal rolling and the portions without thermal rolling occurs in the temperature indicating material if the same has decolored portions (initialized portions) and non-decolored portions (non-initialized portions). The thickness of the ink layer becomes thin in the portions having thermal rolling whereby the density of the decolored portions (initialized portions) after developing will be lower than that of non-decolored portions (non-initialized portions). The method for applying different energies to the temperature indicating material according to the present invention can be used as lessening the phenomenon. That is, applying the thermal energy lower than that for the decolored portions (initialized portions) to the non-decolored portions (non-initialized portions), difference of thickness between the decolored portions (initialized portions) and the non-decolored portions (non-initialized portions) decreases. The portions applied low thermal energy (non-decolored portions) promotes developing in short time, but the decolored portions (initialized portions) has thermocromism characteristic, which accelerates developing according to the environmental temperature and exposure period. Accordingly, the difference of density between the decolored portions (initialized portions) after developing by exposure and the non-decolored portions (non-initialized portions) after developing is able to decrease. Above method, that is, method for applying low voltage to the non-decolored portions (non-initialized portions) also solves the problem with respect to scratches on the temperature indicating material by thermal writing.

The thermal energy, which supplies to the temperature indicating material, should be controlled to take account of thermal storage of the thermal head.

In this embodiment, the initialization using thermal head, but the initialization can be executed by using a heater having small thermal capacity.

Several kinds of use of the temperature indicating material are described above. Any materials can be used for the temperature indicating material according to the use thereof. As the electron donating compound, not only leuco dye A (GN-2) but also materials capable of absorbing, upon color development, an irradiated light of a reader for bar code can be employed. More specifically, when a red light source is employed, leuco dye A which develops blue, black or bluish green color can be used.

As the leuco dye A for black color, the following ones can be used (not limited thereto):
PSD-150, PSD-184, PSD-300, PSD-802 and PSD-290 (each, trade name; product of Nippon Soda Co., Ltd.)
CP-101, BLACK-15 and ODB (each, trade name; product of Yamamoto Chemicals, Inc.)
ETAC, ATP, BLACK-100, S-205, BLACK-305, BLACK-500 (trade name; product of Yamada Chemical Co., Ltd.)
TH-107 (trade name; product of Hodogaya Chemical Co., Ltd.)

As the leuco dye A for blue color, the following ones are usable (not limited thereto).
CVL and BLMB (each, trade name; product of Nippon Soda Co., Ltd.)
BLUE-63 and BLUE-502 (each, trade name; product of Yamamoto Chemicals, Inc.)
BLUE-220 (trade name; product of Yamada Chemical Co., Ltd.) and BLUE-3 (trade name; product of Hodogaya Chemical Co., Ltd.)

As the leuco dye A for bluish green color, the following ones are usable (not limited thereto).
GN-169, GN-2 and Green-40 (each, trade name; product of Yamamoto Chemicals, Inc.)
Green-300 and Green-46 (each, trade name; product of Yamada Chemical Co., Ltd.)

Dyes of red or yellow color can be used if the wavelength of the light source of the reader is changed. The dyes may be used either singly or in combination.

As an example of the developer B which acts as an electron accepting compound in the present examples, PG was mentioned. The developer B is not limited thereto but usable examples include oxides of a phenol, a metal salt of a phenol, a metal salt of carboxylic acid, sulfonic acid, a sulfonate, phosphoric acid, a metal salt of phosphoric acid, an acid phosphate ester, a metal salt of an acid phosphate ester, a phosphite or a metal salt of phosphorous acid. Specific examples include 2,4-dihydroxyacetophenone (2,4-HAP), 2,5-HAP, 2,6-HAP, 3,5-HAP, 2,3,4-HAP, 2,4-dhydroxybenzophenone (2,4-HBP), 4,4'-HBP, 2,3,4-HBP, 2,4,4'-HBP, 2,2',4,4'-HBP, 2,3-dihydrobenzoic acid, methyl 3,5-dihydrobenzoate, 4,4'-biphenol and 2,3,4,4'-tetrahydroxybenzophenone.

The electron accepting compound largely affects the color development rate. Described specifically, the time from the separation of the electron accepting compound from the reversal material and thermochromism controller to the association with the electron donating compound and color development can be changed largely by the nature of the electron accepting compound. Temperature characteristics can be changed by selecting its material. A binder resin is selected according to the desired temperature characteristics. Examples of the binder resin include ethylene copolymers such as polyethylene, chlorinated polyethylene, ethylenevinyl acetate copolymer and ethyleneacrylic acid-maleic anhydride copolymer, polybutadienes, polyesters such as polyethylene terephthalate, polybutylene terephthalate and polyethylene naphthalate, polypropylenes, polyisobutylenes, polyvinyl chlorides, polyvinylidene chlorides, polyvinyl acetates, polyvinyl alcohols, polyvinyl acetals, polyvinyl butyrals, fluorine resins, acrylic resins, methacrylic resins, acrylonitrile copolymers, styrene copolymers such as polystyrene, halogenated polystyrene and styrene methacrylic acid copolymer, acetal resins, polyamides such as nylon 66, polycarbonates, cellulose resins, phenol resins, urea resins, epoxy resins, polyurethane resins, diaryl phthalate resins, silicone resins, polyimide amides, polyether sulfones, polymethyl pentenes, polyether imides, polyvinyl carbazoles and amorphous polyolefin. These resins may be used either singly or in combination.

In these examples, PET is used as a base material, but the base material is not limited thereto. In this example, the temperature monitoring material is in the form of a label, but it can be used in the form of a thermal transfer ink ribbon or in the form of a thermosensible paper.

In this embodiment, the temperature indicating material 7 is decolored for initialization by heating of the thermal head, but the method for decoloring is not limit thereto. Any method for changing energy with respect to heating and quenching can be used.

The temperature monitoring member according to present invention obtains same result, without using plural temperature indicating materials having different thermocromism characteristics one another, to the temperature monitoring member including the plural temperature indicating materials having different thermocromism characteristics one another. The temperature monitoring member according to present invention is also able to identify environmental temperature, exposure period and both these identify environmental temperature and exposure period. Accordingly, low cost temperature monitoring member such as the temperature monitoring label 1 shown in FIG. 6 can be easily obtained.

The present invention may be embodied in other specific forms without departing from the spirit or essential characteristics thereof. The present embodiment is therefore to be considered in all respects as illustrative and not restrictive, the scope of the present invention being indicated by the appended claims rather than by the foregoing description and all changes which come within the meaning and range of equivalency of the claims are therefore intended to be embraced therein.

The present application is based on Japanese Priority Documents Hei 11-143318 filed on May 24, 1999 and Hei 11-297280 filed on October 19, 1999, the content of which are incorporated herein by reference.

## Claims

1. A method for initializing control of a thermal indicating material, comprising the steps of:
applying thermal energy to certain area of the thermal indicating material, which undergoes color changes with temperature, provided on the base; and
applying thermal energy with different level to different area of the thermal indicating material so as to obtain different thermocromism characteristics in each thermal energy applied area of the thermal indicating material.

2. A thermal monitoring member, comprising:
a base; and
a thermal indicating material, which undergoes color changes with temperature, provided on the base, color changing rate of the thermal indicating material differs from temperature to temperature after initialize by heating and quenching;
wherein information is recorded on the thermal indicating material by heating and quenching energy for initialize of the thermal indicating material, the heating and quenching energy is set according to target value with respect to color changing rate.

3. A thermal monitoring member according to claim 2, wherein the thermal indicating material comprising at least an electron donating compound, an electron accepting compound, a reversal material, a thermochromism controller and a binder resin.

4. A thermal monitoring method for an article having a thermal monitoring member comprising a thermal indicating material, which undergoes color changes with temperature, comprising the steps of:
applying thermal energy to certain area of the thermal indicating material, color changing rate of the thermal indicating material differs from temperature to temperature after initialize by heating and quenching, color changing rate of the thermal indicating material differs from heating and quenching energy for initialize of the thermal indicating material to the same; and
applying thermal energy with different level to different area of the thermal indicating material so as to obtain different thermocromism characteristics in each thermal energy applied area of the thermal indicating material so that environmental temperature or exposure period can be identified.

5. A thermal monitoring method according to claim 4, wherein bar codes are recorded on the thermal indicating material by heating and quenching energy for initialize of the thermal indicating material with different level so as to change the code of the bar code according to the environmental temperature or the exposure period.
